# EUROPÄISCHE PATENTSCHRIFT

(11) **EP 4 337 574 B1**
(45) Veröffentlichungstag und Bekanntmachung des Hinweises auf die Patenterteilung: **21.05.2025**
(21) Anmeldenummer: 23744392.4
(22) Anmeldetag: 12.07.2023
(51) Int. Cl.: B65G 1/04, B65G 57/30, B65G 60/00

(54) **SORTIERVORRICHTUNG**
SORTING DEVICE
DISPOSITIF DE TRI

(30) Priorität: 13.07.2022 EP 22184647
(43) Veröffentlichungstag der Anmeldung: 20.03.2024
(73) Patentinhaber: MARTISTEL INNOVATION FZCO, Dubai (AE)
(72) Erfinder: SULTANOV, Oleg, Moscow, 119435 (RU); RAZUMOV, Sergey, 2047 (CY)
(74) Vertreter: Jeck, Jonathan
(86) Internationale Anmeldenummer: PCT/EP2023/069317
(87) Internationale Veröffentlichungsnummer: WO 2023/227801

(56) Entgegenhaltungen:
- CN-B- 111 153 220
- JP-A- H07 291 455
- JP-A- S6 371 026

## Beschreibung

Die vorliegende Erfindung betrifft eine Umsortiervorrichtung gemäß Anspruch 1 sowie ein System zum Speichern und Organisieren von Materialien gemäß Anspruch 3.

Zum besseren Verständnis des Wesens der vorgeschlagenen technischen Lösung folgt nachstehend die Beschreibung eines spezifischen Implementierungsbeispiels, das kein einschränkendes Beispiel für die praktische Implementierung eines automatischen Systems zum Speichern von Materialien und Sammeln von Sätzen davon ist.

Die JP S63 71026 A offenbart eine Vorrichtung mit den Merkmalen des Oberbegriffs des Anspruchs 1, welche ausgebildet ist, die Anzahl von zu stapelnden Aufzuchtkästen konstant zu halten. Dabei wird ein Sensor installiert, der feststellt, dass die Anzahl dieser Aufzuchtkästen ein ganzzahliges Vielfaches des voreingestellten Wertes erreicht hat, und der Betrieb eines Querfördermechanismus für diese nacheinander zugeführten Aufzuchtkästen gesteuert.

Als ein wesentlicher Unterschied zur vorliegenden Erfindung ist dabei festzustellen, dass dabei Aufzuchtkästen über ein Förderband geführt werden, welches die Kästen mit Erde, Wasser und Samen bestückt. Anschließend werden die einzelnen auf dem Förderband (5) befindlichen Tabletts über einen Hebemechanismus (10) in derselben Reihenfolge, wie sie auf das Förderband (5) gelangten, wieder gestapelt und stapelweise über ein nach unten hin geöffnetes Regal (12) an ein Transportvorrichtung (13) übergeben, indem ein Haltepaar (12a) die im Regal befindlichen Kästen durch die besagte Öffnung an die Transportvorrichtung übergibt. Eine Umsortierung erfährt der Stapel dabei nicht. Ebenfalls ist das Haltepaar 12a nicht ausgebildet von der Transportvorrichtung 13 Kästen Aufzunehmen und an diese wieder abzugeben. Weiterhin weist die JP S63 71026 A keine zwei voneinander unabhängig operierende Greifer auf, welche jeweils für sich genommen ausgebildet sind unabhängig voneinander Kästen von der Transportvorrichtung aufzunehmen und an diese Abzugeben, wodurch die Umsortierung nach der vorliegenden Erfindung realisiert wird.

Die JP H07 291455 A lehrt eine Möglichkeit einem kleinen Motor, der ein geringes Drehmoment ausübt, zum Austausch von Behältern zu dienen, indem er ein Lagerelement bereitstellt, das mit einem Flüssigkeitsdruck arbeitet, und ein Drucksteuerungsmittel bereitstellt, um den Flüssigkeitsdruck des Lagerteils in Verbindung mit der Bewegung eines vertikalen Rahmens konstant zu steuern, so dass die Gewichte des vertikalen Rahmens, eines sich horizontal bewegenden Elements und eines Halteelements getragen werden.

Aus der CN 111 153 220 B geht ein Stapelmechanismus zum Palettieren von Verpackungskartons hervor und gehört zum Gebiet der Verpackungs- und Bearbeitungsmaschinen. Ein Stapelbehälter-Zuführungsbügel, ein Stapelbehälter-Stapelungsbügel und ein Stapelbehälter-Entladungsbügel des Stapelmechanismus sind nacheinander und fest in der horizontalen Förderrichtung der Verpackungskartons angeordnet, eine Vielzahl von rotierenden Rollen für den vorderen Kartontransport sind nacheinander und drehbar mit der Position eines vorderen Kartontransportbügels auf der Oberseite des Stapelbehälter-Zuführungsbügels in horizontaler Richtung verbunden, ein Hebe-Einstellmechanismus, ein Kasten-Klemm- und Fixiermechanismus und ein Stapelbehälter-Hebemechanismus sind nacheinander und fest auf dem Stapelbehälter-Stapelträger in vertikaler Richtung von oben nach unten angeordnet, und mehrere hintere Kasten-Förderrollen sind nacheinander und drehbar mit der Position eines hinteren Kasten-Förderträgers in horizontaler Richtung an der Oberseite des Stapelbehälter-Entladeträgers verbunden. Der Stapelmechanismus ist sinnvoll konstruiert, die Verpackungskartons mit verschiedenen Größen und Spezifikationen können effizient und stabil nacheinander gestapelt werden, der Betrieb ist zuverlässig, die Stapelleistung und die Qualität der Verpackungskartons können gewährleistet werden, der Automatisierungsgrad des Stapelns von Verpackungskartons wird erhöht und die Anforderungen an die Produktion werden erfüllt.

Die beanspruchte Erfindung welche in Anspruch 1 definiert wird und eine verbesserte Umsortiervorrichtung darstellt, wird anhand der beigefügten Zeichnungen näher erläutert. Es zeigen:
- Fig. 1: ein allgemeines Diagramm eines automatischen Systems,
- Fig. 2: ein automatisches System, Vorderansicht, perspektivische Ansicht,
- Fig. 3: ein schematisches Diagramm einer mobilen Transportvorrichtung,
- Fig. 4: eine allgemeine Ansicht eines mobilen Transportgeräts,
- Fig. 5: ein mobiles Transportgerät mit einem Stapel von Schalen an Bord,
- Fig. 6: ein schematisches Diagramm einer Vorrichtung zum Heben von Stapeln von Schalen,
- Fig. 7: eine Vorrichtung zum Anheben von Stapeln von Schalen, allgemeine Ansicht,
- Fig. 8: eine Vorrichtung zum Anheben von Stapeln von Tabletts, die mit Stapeln von Tabletts interagieren, und eine mobile Transportvorrichtung,
- Fig. 9 - 11: eine alternative Ausführungsform mit einem Greifer und einem/r beweglichen Ablagebereich/Ablageeinrichtung, welche den zweiten Greifer ersetzen kann mit vorteilhaftem Bewegungsablauf
- Fig. 12: eine Kombination der ersten und zweiten Ausführungsform, also mit mindestens einem weiteren Greifer und mindestens einem/r beweglichen Ablagebereich/Ablageeinrichtung,
- Fig. 13: zeigt eine automatische Vorrichtung zum Umsortieren eines Stapels von Tabletts. Perspektivische Ansicht,
- Fig. 14: zeigt eine automatische Vorrichtung zum Umsortieren eines Stapels von Tabletts. Ansicht von vorne,
- Fig. 15: zeigt eine automatische Vorrichtung zum Umsortieren eines Stapels von Tabletts. Seitenansicht,
- Fig. 16: zeigt eine automatische Vorrichtung zum Umsortieren eines Stapels von Tabletts. Ansicht von oben,
- Fig. 17: zeigt ein im System verwendetes Fach. Zwei perspektivische Ansichten: oben links und unten rechts,
- Fig. 18: zeigt einen Greifer eines Paares in seinem ursprünglichen Zustand. Perspektivische Ansicht und
- Fig. 19: zeigt einen der beiden Griffe im ausgefahrenen Zustand. Der Blick ist perspektivisch.
- Fig. 20 - 31: zeigen Schritte im Prozess der Ausrichtung eines Stapels von Tabletts (101), die auf einer Transportvorrichtung (130) einer Nachsortiervorrichtung (310, 320) zugeführt werden.

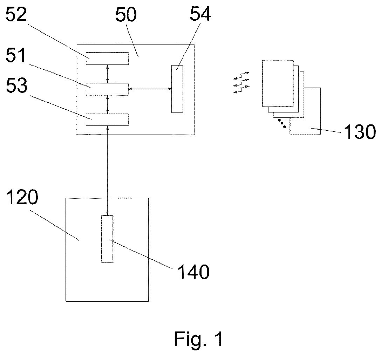

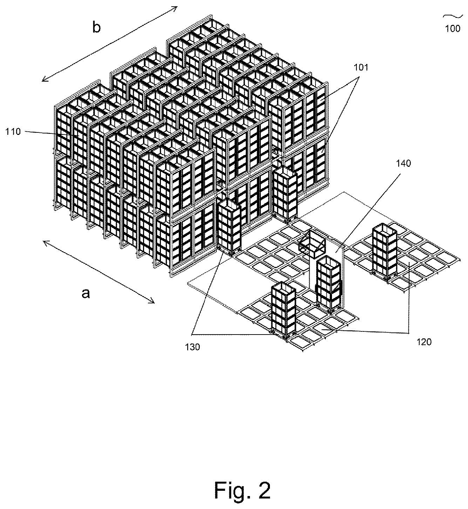

Wie in den Figuren 1 und 2 gezeigt, weisen das automatische Boxen-SpeicherSystem und/oder das Organisationssystem bevorzugt ein Steuermodul 50 und/oder ein Speichersystem 110 und/oder einen Boxen-/Schalen-Sortierbereich 120 auf. Das Steuermodul 50 weist einen zentralen Steuerprozessor 51 und/oder eine Auftragsverarbeitungs-Einheit 52 und/oder eine Schnittstelle 53 und/oder eine drahtlose Schnittstelle 54 auf, bevorzugt zu der Einrichtung 120 und/oder 140. Nach der vorliegenden Erfindung können die Begriffe Schalen, Boxen, Tablar und Tablett als zu transportierendes Medium durch das mobile Transportgerät 130 gleichbedeutend, also synonym verwendet sein.

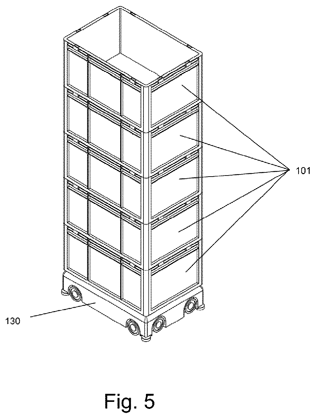

Mehrere mobile Transportvorrichtungen 130 können über eine drahtlose Schnittstelle 54 von einem Zentralprozessor 50 gesteuert werden und/oder sind bereitgestellt, sowohl leere also auch volle Boxen/Schalen als auch gestapelte Boxen/Schalen/Tabletts 101 (Fig. 5) sowohl innerhalb des Speichersystems 110 als auch (und/oder) in dem Sortierbereich der Schalen 120 sowie zwischen den genannten Bereichen zu transportieren.

Wie in Fig. 2 dargestellt, sind in dem Boxen/Schalen-Sortierbereich 120 mindestens eine, bevorzugt mindestens zwei Vorrichtungen, zum Anheben 140/142 von Stapeln von Boxen/Schalen/Tabletts 101 vorhanden. Insbesondere kann die Vorrichtung 140/142 ausgebildet sein, Boxen/Schalen von einer Transportvorrichtung, bevorzugt in dem Sortierbereich, zu heben. Es können sowohl alle Boxen/Schalen als auch eine Teilmenge von Boxen/Schalen von der Transportvorrichtung angehoben bzw. aufgenommen werden. Zusätzlich kann der Boxen/Schalen-Sortierbereich 120 mehrere Pufferplätze enthalten, um mehrere TMU 130 oder deren Boxen aufzunehmen, falls diese vorzeitig ankommen und auf ihre Weiterverarbeitung warten.

Die Schalen innerhalb des Speichersystems 110 sind in Stapeln von vorzugsweise n Schalen übereinander gelagert, in einem speziellen Fall ist n >= 5, wie in den Figuren dargestellt.

Wie in Fig. 2 kann der Speicherbereich von gestapelten Schalen 110 mehrstöckig mit mehreren separaten Stapeln 110 übereinander ausgebildet sein.

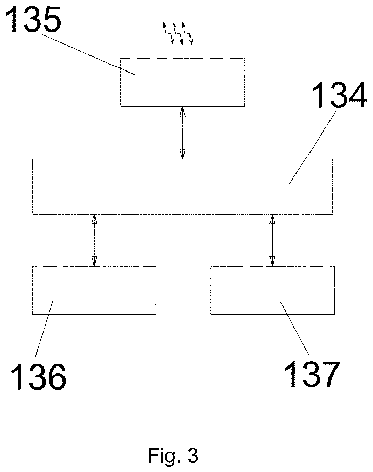

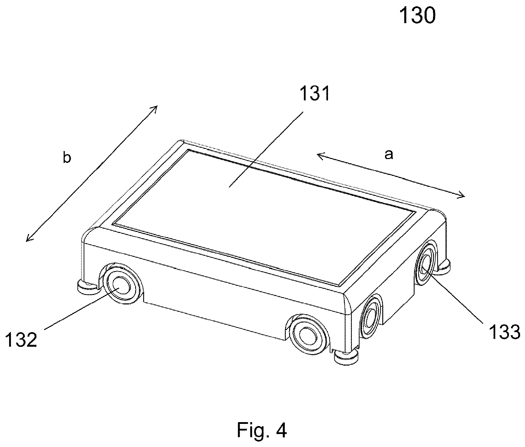

Die in Fig. 3 - 5 gezeigte Transportvorrichtung 130 umfasst bevorzugt einen Hubtisch 131, der zum Aufnehmen und Transportieren von Schalen/Boxen 101 oder Stapeln von Schalen/Boxen davon ausgelegt ist, und zwei Gruppen von Antriebsrädern 132 und 133, die die Vorrichtung in zwei zueinander senkrechten horizontalen Richtungen bewegen sollen.

Der konstruktive Aufbau der TMU 130 bzw. der Lagereinrichtung 110 ist derart hergestellt, dass eine leere/unbeladene Vorrichtung 130 mit seinem Hubtisch 131 ohne darauf befindliche/transportierte Schalen/Box im Speicherbereich 110 jeweils unterhalb der Stapel hindurch frei beweglich verfahrbar ist. Dadurch kann die TMU auch Stapeln zugestellt werden, die sich in weiter hinten liegenden Bereichen des Speicherbereichs befinden, ohne einen Umweg um den Speicherbereich selbst herum fahren zu müssen.

Die mobile Transportvorrichtung 130, welche Teil der erfindungsgemäßen Umsortiervorrichtung ist, kann auf jede bekannte Weise gesteuert werden. Insbesondere kann eine eingebettete (industrielle) Steuerung 134 mit einer drahtlosen Schnittstelle 135 zur Kommunikation mit dem Zentralprozessor 51 des automatischen Systems zur Steuerung verwendet werden. Die Steuerung 134 steuert die Treiber 136 der Antriebe der Räder 132 und 133 für die Bewegung, bevorzugt entlang von Schienen, in vorzugsweise zwei Richtungen in einer Ebene und/oder den Treiber 137 der vertikalen Position der Räder 132, 133, über welchen die Räder angehoben werden können und dadurch die Unterseite des Hubtisches den Boden berühren kann und/oder den Zustand des Hubtisches 131 (Höhenverstellbarkeit). Die Schienen können in dem Speicherbereich 110 und/oder im Sortierbereich, also auch zwischen den Bereichen, verbindend vorliegen und können als Grundlage für die Bewegung der Transportvorrichtungen 130 bereitgestellt sein.

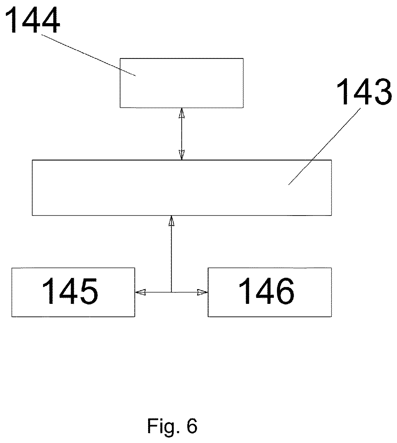

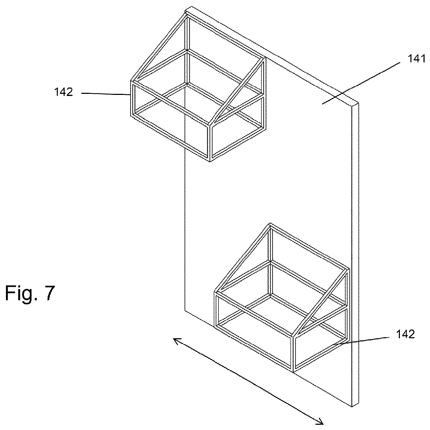

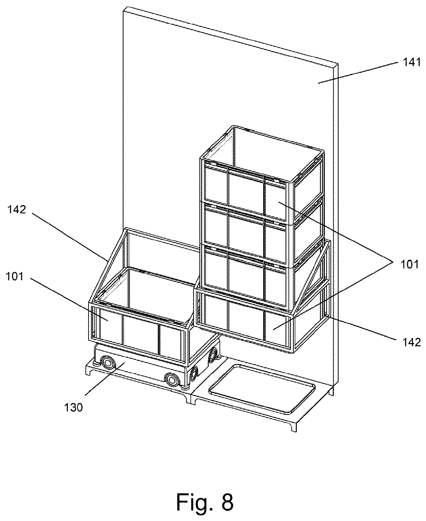

In den Fig. 6 bis 8 wird eine Vorrichtung 140 zum Heben von einzelnen oder von Stapeln von Boxen/Schalen mit einen (Grund)Körper 141 und mindestens zwei Greifern 142 gezeigt, die sich in vertikaler Richtung relativ zu dem Körper 141 bewegen und das Ergreifen/Aufnehmen und Heben einer beliebigen Anzahl von Boxen/Schalen 101 von oder auf eine TMU 130 im Betriebsbereich der Greifer 142 ermöglichen. Bevorzugt befindet sich die TMU für das Aufnehmen/Ergreifen der Boxen/Schalen durch einen Greifer unterhalb des Greifers. Der Greifer kann mit einem Rahmen bereitgestellt sein, welcher so dimensioniert ist, dass er über einen Stapel von Boxen übergestülpt werden kann. Die Greifer können dabei mit den Schalen/Boxen zustellbaren Halteelementen/ Haltenasen/Haltebügeln oder sonstigen Einrichtungen ausgestattet sein, welche ausgebildet sind, Boxen/Schalen 101, welche dem Greifer (übergestülpt, siehe z. B. Fig. 8) zugestellt sind, am Greifer 142 zu halten.

Die Vorrichtung zum Heben von Stapeln von Schalen 140 kann auch auf irgendeine bekannte Weise gesteuert werden. Insbesondere kann eine eingebettete industrielle Steuerung 143 verwendet werden, die eine Schnittstelle 144 zur Kommunikation mit dem Zentralprozessor 51 des automatischen Lagersystems 100 aufweist. Bevorzugt steuert die Steuerung 143 die Treiber 145 und 146 der jeweiligen Greiferantriebe 142 zum Aufnehmen und Anheben der (Stapel von) Schale(n)/ Box(en) 101 in vertikaler Richtung.

Fig. 8 zeigt die Wechselwirkung der Vorrichtung 140 zum Heben von Stapeln von Schalen mit Schalen/Boxen 101, die auf der mobilen Transportvorrichtung 130 stehen. Wie zu erkennen ist, nähert sich die mobile Transportvorrichtung 130 zuerst dem ersten (rechten) Greifer 142 der Vorrichtung 140, wobei der erste Greifer 142 im vorliegenden Beispiel ausgewählt ist, die vier oberen Boxen/Schalen 101 des Stapels, die auf der TMU 130 stehen, anzuheben.

Danach bewegt sich die TMU 130 in einer ersten horizontalen Richtung unter den zweiten (linken) Greifer 142 der Vorrichtung 140. Dann hebt der zweite Greifer 142 die (verbleibende) Schale/Box 101 von der TMU 130 an.

Anschließend bewegt sich die TMU unter dem ersten Greifer 142 der Vorrichtung 140, wodurch der zuerst abgehobene Stapel der Schalen/Boxen 101 auf die TMU 130 gelegt wird. Danach bewegt sich die TMU 130 wieder unter dem zweiten (entsprechend angehobenen) Greifer 142 der Vorrichtung 140, die die zuvor untere Schale/Box 101 des Stapels nun oben auf dem Stapel platziert. Nach der vorliegenden Erfindung kann es sich bei den beschriebenen und beanspruchten "Systemen" um Vorrichtungen und Einrichtungen handeln.

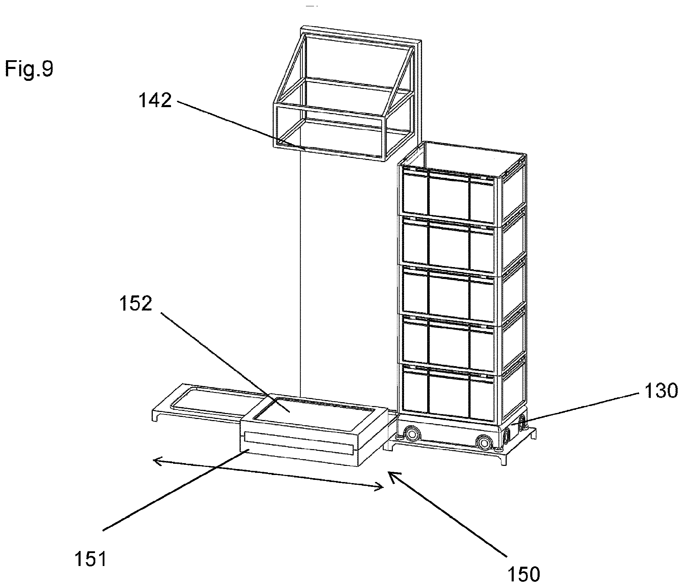

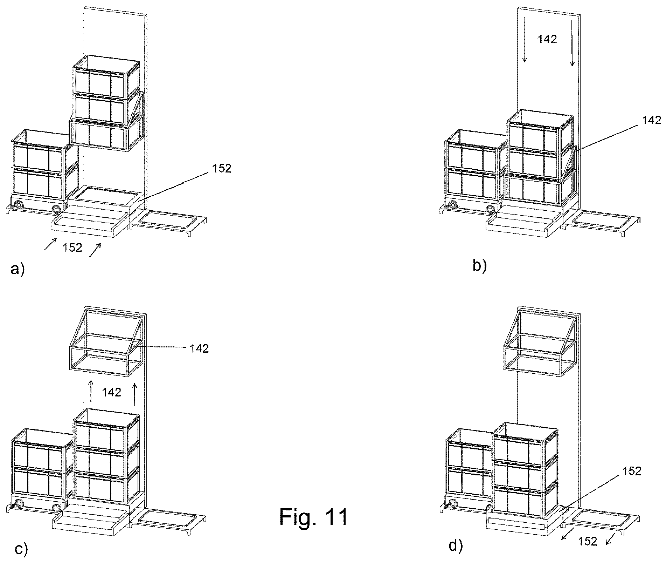

Alternativ oder ergänzend kann es vorgesehen sein, anstatt einem zweiten Greifer zusätzlich zu diesem/r einen beweglichen Ablagebereich/Ablageeinrichtung in der Nähe des Greifers vorzusehen (Fig. 9 - 11). Ein beweglicher Teil 152 des/r Ablagebereichs/Ablageeinrichtung 150, beispielsweise eine bewegliche Ablage oder ein (verschiebbares/verlagerbares) Förderband, kann dabei dem Greifer 142 zustellbar sein, wodurch der Greifer aufgenommene Boxen an den/die Ablagebereich/Ablageeinrichtung übergeben kann (z. B. auf diesem ablegen - vgl. Fig 11b).

Die Ablageeinrichtung kann eine ortsfeste Basis 151 aufweisen, an und/oder gegenüber welcher der bewegliche Teil 152 der Ablageeinrichtung verschieblich gelagert ist.

Der/Die bewegliche Ablagebereich/Ablageeinrichtung kann dann von dem Greifer (unterhalb des Greifers) wegbewegt werden (Fig. 11c → 11d), wodurch ein Ladebereich (unterhalb) des Greifers, also ein Bereich freigegeben ist (Fig. 11d), in welchem eine Transportvorrichtung 130 vorgesehen sein kann, so dass der Greifer dessen Boxen übernehmen oder an diese abgeben kann,

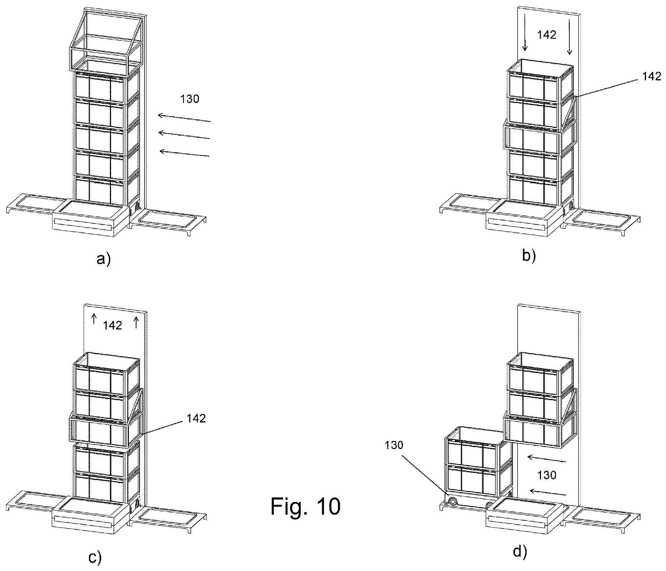

Dadurch ist es ermöglicht, dass der Greifer beispielsweise zunächst einen oder mehrere Boxen einer Transporteinrichtung übernimmt (Fig. 10b → 11c), diese dann an den/die Ablagebereich/Ablageeinrichtung übergibt (Fig. 11a → 11b → 11c) und dadurch für die Aufnahme weiterer Boxen freigegeben ist. Befindet sich eine leere Transportvorrichtung neben dem/bei dem/r beweglichen Ablagebereich/Ablageeinrichtung und/oder im Ladebereich des Greifers, kann der/die bewegliche Ablagebereich/Ablageeinrichtung die zwischengelagerten Boxen (Untermenge) auf die Transporteinrichtung wieder übergeben. Alternativ kann der/die Ablagebereich/Ablageeinrichtung die Boxen zu gegebener Zeit wieder an den Greifer 142 übergeben, wodurch insgesamt eine Umsortierung der Boxen eines oder mehrerer Transportvorrichtungen ermöglicht ist.

Nach der vorliegenden Erfindung kann Umsortieren insbesondere bedeuten, die Reihenfolge von Boxen in einem bestehenden Stapel von Boxen mittels der erfindungsgemäßen Vorrichtung ändern zu können.

Nach der vorliegenden Erfindung ist ein Stapel von Boxen vorzugsweise eine Menge von mindestens zwei, vorzugsweise drei, vier, fünf oder mehr übereinander angeordneten Boxen.

Nach der vorliegenden Erfindung kann eine Untermenge von Boxen eines Stapels mindestens eine Box weniger sein als in dem jeweiligen Stapel vorhanden ist.

Anschließend kann die Transportvorrichtung mit der Untermenge an Boxen zur weiteren Bearbeitung abgeführt werden, oder auf die Untermenge können die zusätzlichen Boxen, welche von dem Greifer aufgenommen sind, aufgeladen werden. Dadurch kann eine um Sortierung von Boxen/eines Stapels auf einer Transportvorrichtung mittels entweder mindestens zweier Greifer oder durch mindestens einen Greifer in Kombination mit dem/r voranstehend beschriebenen mobilen Ablagebereich/Ablageeinrichtung ermöglicht sein. Die vorliegende Erfindung betrifft eine entsprechende Vorrichtung.

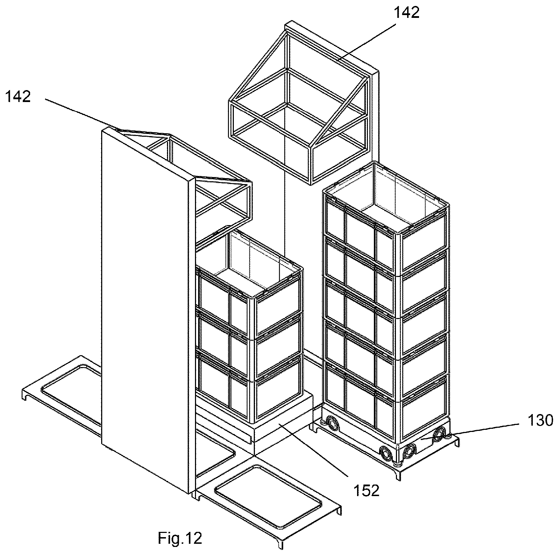

Grundsätzlich ist es auch denkbar, eine Kombination der ersten und der zweiten Ausführungsform vorzusehen, wie es beispielhaft aus Fig. 12 hervorgeht. Hierdurch kann sowohl ein Austausch von Boxen wie nach der Ausführungsform der Fig. 9 - 11 erfolgen, aber zusätzlich auch ein Austausch von Boxen zwischen unterschiedlichen Transportvorrichtungen 130 oder die Übergabe von Boxen von einer Transportvorrichtung an eine zweite.

Eine mögliche Umsortierung mittels der Ausführungsform nach Figur 11 könnte beispielsweise folgendermaßen erfolgen:
Eine erste Transportvorrichtung 130 wird in einen Bereich unterhalb eines ersten der beiden dargestellten Greifer 142 verfahren. Dieser erste Greifer 142 übernimmt eine beliebige Anzahl von Boxen von der Transportvorrichtung 130. Anschließend übergibt der erste Greifer 142 die Boxen oder eine Untermenge von Boxen an den beweglichen Teil 152 des/r Ablagebereichs/Ablageeinrichtung, welcher dafür diesem ersten Greifer zustellbar ist.

Auf der anderen Seite, bei dem zweiten Greifer 142, kann dieser nun entweder die Boxen von dem/r Ablagebereich/Ablageeinrichtung übernehmen, welcher dafür dem zweiten Greifer 142 zugestellt wird, oder der Greifer ist bereits mit Boxen beladen, welche der Greifer auf den Stapel von Boxen des/r Ablagebereichs/Ablageeinrichtung ablegen kann, soweit der/die Ablagebereich/Ablageeinrichtung dem Greifer zugestellt ist. Anschließend kann der Greifer wiederum alle Boxen oder eine Untermenge der zusammengeführten Boxen anheben und, nachdem der/die Ablagebereich/Ablageeinrichtung aus dem Ladebereich des zweiten Greifers (zusammen mit den restlichen Boxen, soweit zutreffend) zurückgezogen ist, die gehaltenen Boxen des zweiten Greifers auf eine Transporteinrichtung 130 übergeben, welche in dem Ladebereich des zweiten Greifers 142 positioniert wird.

So kann ein Umschichten zwischen verschiedenen Transportvorrichtungen 130 und/oder eine Änderung der Reihenfolge von Boxen einer Transportvorrichtung 130 ermöglicht werden.

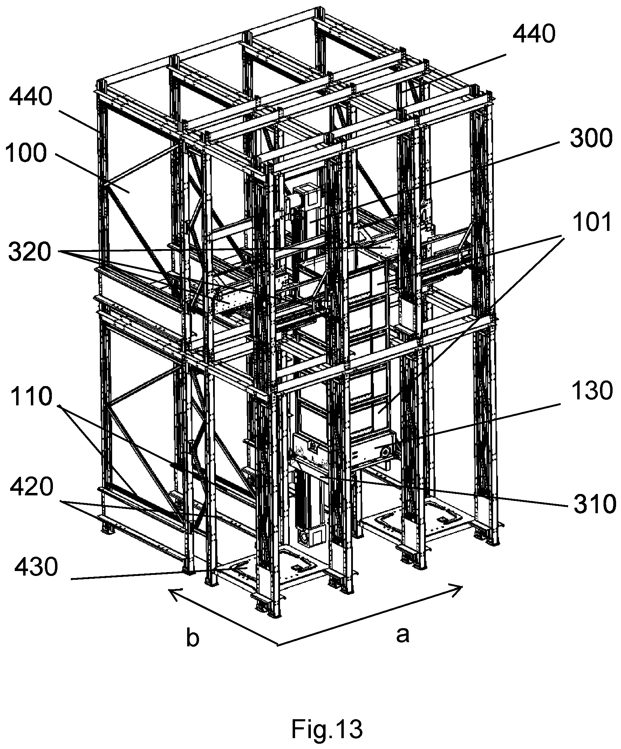

Abbildung 13 zeigt einen Ausschnitt aus dem Gerüst eines Lagersystems 100, in das eine stapelbare Tablar/Box-Umsortiereinrichtung integriert ist. In der gezeigten Darstellung umfasst das Lagersystem 100 bevorzugt Regalabschnitte 440 mit einer Mehrzahl von Lagerplätzen 110, auf denen Stapel von Tablaren 101 gelagert werden. Die Lagerplätze 110 des Lagersystems 100 sind vorzugsweise in zwei horizontalen, zueinander senkrechten Richtungen a und b sowie in mehreren vertikalen Ebenen angeordnet.

Um die Bewegung der Tablare oder Tablarstapel (Boxstapel) 101 zu ermöglichen, sind unterhalb der Lagerplätze 110 beispielsweise Schienen 420 vorgesehen, die in den Durchgängen zwischen den Abschnitten 440 durch Gleiskreuzungen 430 miteinander verbunden sein können. Die Kombination der Schienengleise 420 mit den Kreuzungsgleisen 430 kann ein Transportnetz bilden, auf dem das automatische mobile Transportgerät 130 (TMU) bewegt wird.

Das Transportmobil 130 ist zum Aufnehmen oder Absetzen von Boxstapeln/Tablarstapeln 101 zwischen den Lagerplätzen 110 des automatischen Lagersystems 100 bestimmt. Das mobile Transportgerät 130 kann sich entlang des Transportnetzes in zwei zueinander senkrechten horizontalen Richtungen a und b bewegen.

Die Boxstapel-Umsortiervorrichtung 300 ist ebenfalls in Abbildung 13 dargestellt. In der gezeigten Darstellung weist es einen Ladebereich 310 mit einem vertikal beweglichen Ablagebereich und zwei Greifer(paaren) 320 auf, die in einer horizontalen Ebene des Lagersystems 100 auf zwei/beiden Seiten des beweglichen Ablagebereichs des Ladebereichs 310 vorzugsweise an den Kreuzungspunkten 430 angeordnet sind.

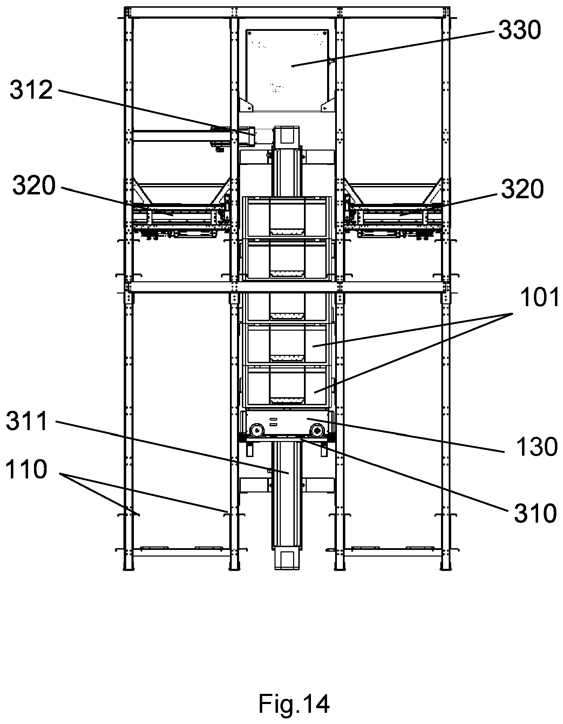

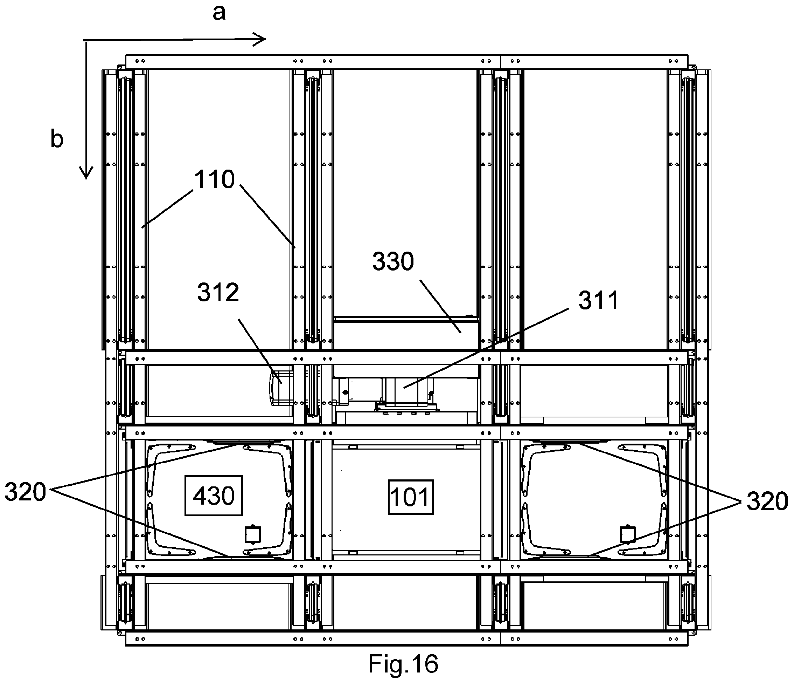

Wie in den Figuren 13-16 dargestellt, besteht der Ladenbereich310 der Umsortiervorrichtung aus einem Schlitten/Ablagebereich 310, der sich vorzugsweise vertikal entlang einer Säule 311 bewegt und von einem elektrischen Antrieb 312 angetrieben werden kann. In seiner unteren Position kann der Ablagebereich des Ladebereichs 310 auf das Transportnetz einer unteren Lagerebene ausgerichtet sein. Die obere Arbeitsfläche des Ladenbereichs 310 folgt vorzugsweise der Geometrie der benachbarten Gleiskreuzungen 130, so dass sich die TMU 130 sowohl in der ersten horizontalen Richtung (entlang des Durchgangs zu den benachbarten Kreuzungen 130) als auch in der zweiten horizontalen Richtung (in der die vertikale Säule 311 nicht vorhanden ist) zu ihr hin oder von ihr wegbewegen kann. Darüber hinaus kann ein Batterieladegerät (in den Abbildungen nicht dargestellt) auf dem Ablagebereich des Ladebereichs 310 montiert sein, dass die Batterien der TMU 130 während der gesamten Zeit, in der sie sich auf dem Ablagebereich des Ladebereichs befindet, auflädt.

Die vertikale Bewegung des Ablagebereichs des Ladenbereichs 310 in der in den Figuren gezeigten Ausführungsform ermöglicht es, die TMU 130 leer oder mit einem Stapel von Tabletts 101 darauf zwischen einer ersten und einer zweiten Lagerebene zu bewegen. Das heißt, durch die Ausrichtung des Ablagebereichs des Ladenbereichs 310 auf das Transportnetz der zweiten Lagerebene kann die TMU 130 in dieselben (drei) Richtungen wie in der ersten Lagerebene hinein- oder herausfahren.

Die Greifer(paare) 320 der automatischen Boxstapelsortiervorrichtung 300 sind so angeordnet, dass sie eine beliebige Anzahl von Tabletts 101 des auf der TMU stehenden Stapels greifen können (1, 2, 3, 4 oder (alle) 5 Tabletts des Stapels, wie im Beispiel in den Abbildungen gezeigt), wenn die TMU 130 auf dem Ablagebereichs des Ladenbereichs 310 bewegt wird.

Die beiden Greifer(paare) 320 der automatischen Boxstapelsortiervorrichtung 300 sind vorzugsweise gleichwertig und haben die gleiche Funktionalität. Die Reihenfolge, in der sie arbeiten, hängt vorzugsweise nur von der Software ab, die den Betrieb des Geräts 300 steuert und die sich vorzugsweise im Schaltkasten 330 befindet.

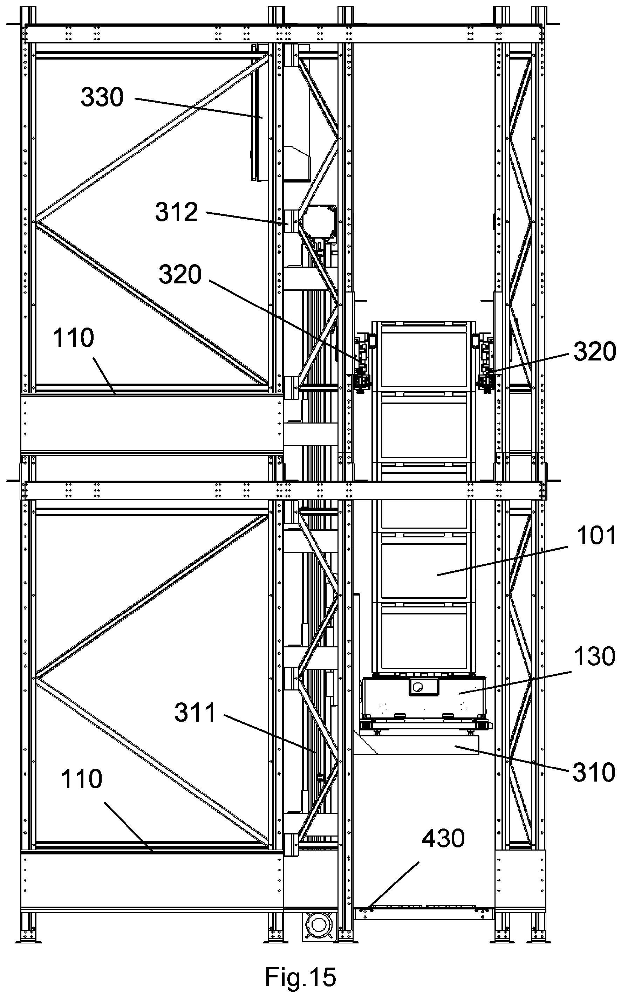

Wie in Abbildung 15 zu sehen ist, sind die Greiferpaare 320 vorzugsweise oberhalb einer zweiten Lagerebene so angeordnet, dass die TMU 130 leer oder mit einem Stapel von Trays 101 den Bereich des Greiferzugriffs 320 auf den Stapel von Boxen auf der TMU in der ersten horizontalen Richtung durchlaufen kann. Damit die TMU 130 auf diese Weise passieren kann, verfügt jedes Greiferpaar 320 vorzugsweise über eigene Antriebselemente.

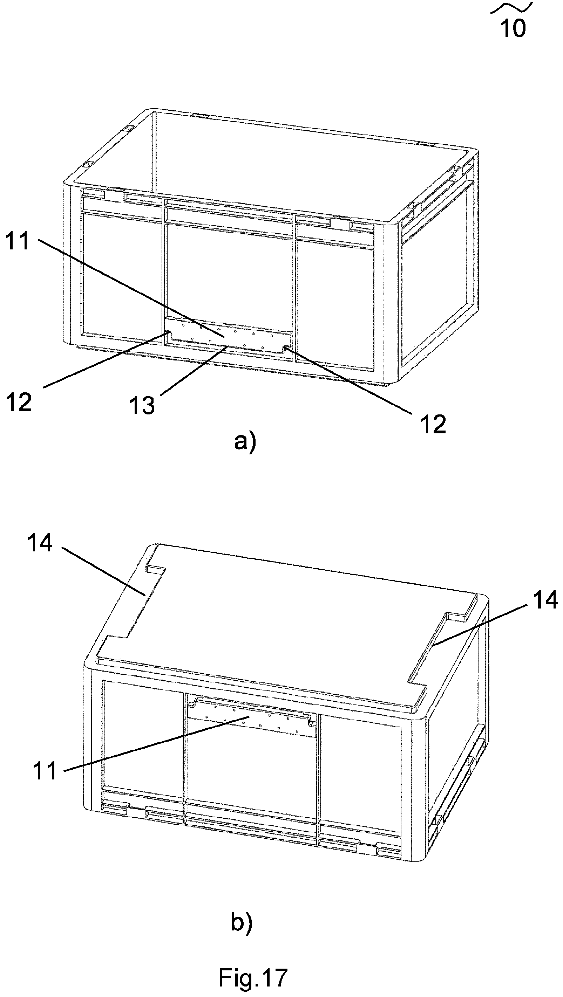

Abbildung 17 zeigt in zwei Ansichten eine Variante des in diesem System verwendeten Tabletts 101. So zeigt die Ansicht 17a eine perspektivische Ansicht des Tabletts 101 von links oben und die Ansicht 17b von rechts unten. Wie in beiden Ansichten dargestellt, befinden sich vorzugsweise an beiden Seitenlängsseiten des Tabletts Stützleisten 11 zur Entnahme des Tabletts 101 aus dem Stapel. Die Stützleisten können dazu dienen, die Tabletts 101 bei der Entnahme gegenüber den Greifern 320 zu zentrieren und das Gewicht der entnommenen Tabletts aufzunehmen. So weisen die Trägerstreifen 11 zur Zentrierung vorzugsweise ein Paar Vertiefungen 12 auf, in die die Elemente der Greifer 320 vor der Entnahme eindringen, und zur Entnahme der Last vorzugsweise eine untere Kante 13, die während der Entnahme auf einem entsprechenden Greiferpolster aufliegt.

Wie in Abbildung 17b gezeigt, weist die Unterseite des Tabletts 101 vorzugsweise Vertiefungen 14 auf, um das untere Tablett 101 des Stapels der TMU 130 zu zentrieren und zu halten, wenn es entnommen und transportiert wird.

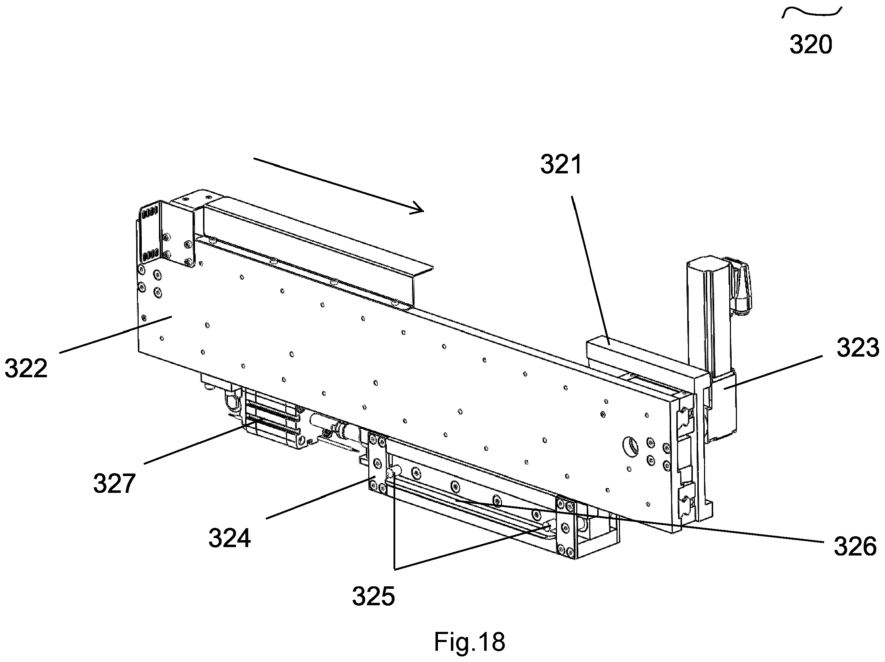

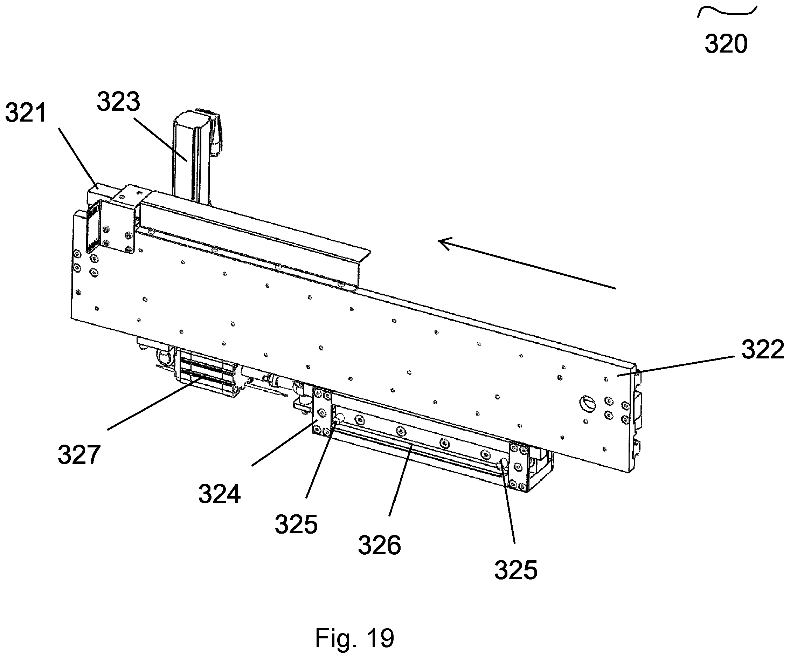

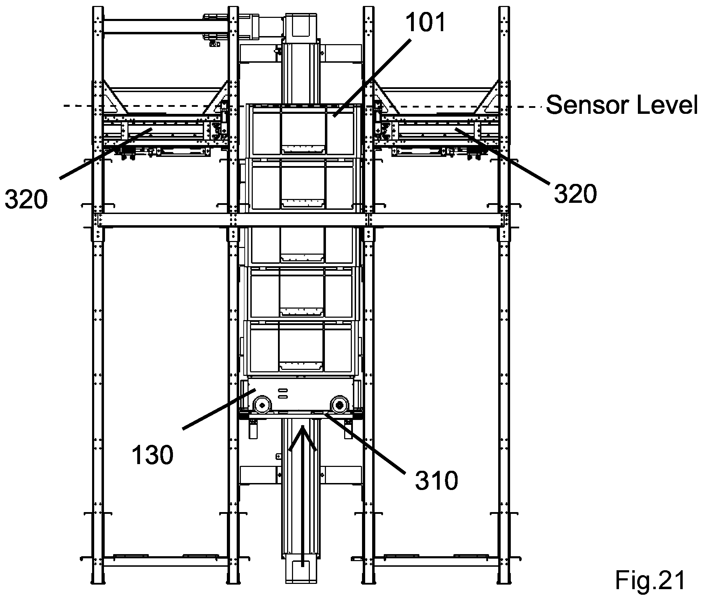

Die Abbildungen 18 und 19 zeigen eine Ausführungsform eines der Greifer 320 des Greiferpaares. Abbildung 18 zeigt den Greifer 320 in seinem ursprünglichen/zurückgezogenen Zustand (Halteposition), wenn sich der Greifer in seiner Positionierungszone befindet. In dieser kann die Box oder eine Mehrzahl von Boxen auf dem Greifer zwischengelagert sein. In Abbildung 21 ist ein beweglicher Teil des Greifers 320 in den Arbeitsbereich/ Aufnahmeposition des Ladebereichs ausgefahren. Der Arbeitsbereich kann sich innerhalb des vertikalen Kanals befinden, in welchem sich der Ablagebereich des Ladenbereichs 310 auf und ab bewegt.

In den Abbildungen 18 und 19 ist zu sehen, dass jeder Greifer 320 eine feststehende Basis 321 und ein relativ dazu bewegliches Modul 322 aufweisen kann, dass durch einen elektrischen Antrieb 323 bewegt werden kann. An der Unterseite des beweglichen Moduls 322 ist vorzugsweise eine Klemme 324 mit zwei Zentrierfingern 325 und einem Stützpolster 326 angebracht. Die Zentrierfinger 325 und das Stützpolster 326 werden vorzugsweise durch einen Aktuator 327, der ebenfalls von unten am beweglichen Modul 322 befestigt ist und sich mit diesem bewegt, aus dem Schatten des beweglichen Moduls 322 ausgefahren. Der zweite Greifer 320 des Paares kann den in der Abbildung gezeigten Greifer wider spiegeln.

Die voranstehend beschriebene automatische Stapelbehälter-Umsortiervorrichtung arbeitet nach dem folgenden Algorithmus:
Die TMU 130 mit dem Tablarstapel 101 fährt auf die Arbeitsfläche/Ablageeinrichtung des Ladebereich 310, der in seiner unteren Position auf der Ebene des Transportnetzes einer ersten Lagerebene des Systems steht.

Der Ablageeinrichtung des Ladebereichs 310, welcher auch als Hubschlitten bezeichnet werden kann, auf dem die TMU 130 mit dem Boxstapel 101 steht, wird auf eine Höhe der Greifer angehoben, um die gewünschte Anzahl der oberen Boxen 10 des Stapels aufzunehmen. Die Ablageeinrichtung hält an.

Ein Greiferpaar 320 wird aus seiner ursprünglichen/zurückgezogenen Position in deren Arbeitsbereich des Ablageeinrichtung des Ladebereichs 310 bewegt. Nach dem Bewegen der beweglichen Module 322 eines Greiferpaares 320 werden vorzugsweise die Klammern 324 mit Hilfe ihrer Stellantriebe 327 in die Position zur Aufnahme des Tabletts 10 gebracht. Dabei können die Zentrierstifte 325 der Klammern 324 in die Aussparungen 12 der Auflagestreifen 11 des Tabletts 10 fallen, und die Stützpolster 326 können unter dem unteren Rand 13 des Tabletts 10 positioniert werden.

Dann wird der Schlitten leicht abgesenkt (vorzugsweise um 30-50 mm), die gewünschte Box (oder der Boxstapel) wird auf die Auflageflächen 326 des Greiferpaares 320 abgesenkt, wodurch die Box(en) vom restlichen Stapel auf der TMU 130 getrennt wird/werden. Danach wird das Paar der beweglichen Module 322/ der Greifer mit dem von ihnen gegriffenen Tablett 101 (oder Tablettstapel) in seinen ursprünglichen Zustand zurückgebracht (ursprünglichen/zurückgezogenen Position).

Danach fährt der Schlitten/ die Ablageeinrichtung auf die Höhe, die erforderlich ist, um die gewünschte Box 101 des auf der MTU 130 stehenden Stapels aufzunehmen. Die Ablageeinrichtung/(Hub)schllitten hält an.

Dann nimmt das zweite (Paar von) Greifer(n) 320, in der gleichen Weise, wie in den Absätzen voranstehend beschrieben, die, die gewünschte Box(en) 101 vom Stapel und bewegt es/sie zur zweiten Seite des Arbeitsbereichs des Ladebereich 310 (ursprünglichen/zurückgezogenen Position des zweiten Greifers(paars))).

Danach bewegt der erste Greifer(paar) 320 / seine beweglichen Module 322 mit der(n) entnommenen Box(en) 101 (oder Schalen) in den Arbeitsbereich der Ablageeinrichtung des Ladebereich 310. Der Ablageeinrichtung des Ladebereichs 310 kann um 30-50 mm angehoben werden, und/oder das Gewicht der Box 10 von den beiden Greifern 320 auf den auf der TMU 130 stehenden Stapel übertragen. Die Klemmen 324 der Greifer 324 können durch die Stellantriebe 327 in ihren Ausgangszustand gebracht werden, und die bereits leeren beweglichen Module 322 der Greifer 320 selbst können danach in ihren Ausgangszustand gebracht werden und verlassen den Arbeitsbereich der Greifer bzw. der Ablageeinrichtung des Ladebereich 310.

Die Ablageeinrichtung des Ladebereichs 310 bewegt sich vertikal in die Position, in der die Box 101 oben auf dem Stapel der auf der TMU 130 stehenden Tabletts platziert wird, also soweit nach unten, dass der zweite Greifer seine getragenen Boxen zurück in den Arbeitsbereich und auf den Stapel von Boxen befördern kann. Die Ablageeinrichtung hält an.

Das zweite Greiferpaar 320 bewegt seine beweglichen Module 322 mit der(n) ursprünglich aufgenommenen Box(en) 101 in den Arbeitsbereich der Ablageeinrichtung des Ladebereichs 310 bzw. des Greiferpaars. Der Schlitten310 / Ablageeinrichtung des Ladebereichs 310 hebt sich um 30-50 mm und überträgt das Gewicht des Boxen 101 vom zweiten Greifer(paar) 320 auf den auf der TMU 130 stehenden Stapel von Boxen. Die Greiferklemmen 324 können durch die Aktuatoren 327 in ihren Ausgangszustand gebracht werden und die bereits leeren beweglichen Module 322 der Greifer 320 selbst können dann in ihren Ausgangszustand gebracht werden und verlassen den Arbeitsbereich des Hubwagens 310.

Der Umsortiervorgang wird durch die vertikale Bewegung des Hubwagens/ Ladebereichs 310 auf die gewünschte Lagerebene (z.B. erste oder zweite) abgeschlossen, woraufhin die TMU 130 mit dem umsortierten Stapel von Boxen 101 in eine der möglichen Richtungen in dem Transportnetzwerk des Lagersystems bewegt wird, um den weiteren Betrieb als Teil des automatischen Lagersystems auszuführen.

Es sollte auch verstanden werden, dass der zuvor beschriebene Algorithmus des Betriebs der automatischen Stapel-Umsortiervorrichtung nicht der einzig mögliche ist, sondern nur einer der häufigsten Sonderfälle des Gerätebetriebs der Umsortiervorrichtung im System beschreibt, wenn eine beliebige Box in Ihrem Stapel nach oben gesetzt werden soll. Der Arbeitsbereich kann auch als Aufnahmeposition der Greifer bezeichnet werden. Die Zurückgezogene Position kann auch als Halteposition bezeichnet werden.

Neben den bereits beschriebenen Funktionen (310, 320), nämlich dem Umsortieren des Stapels von Tablaren (101) und dem Bewegen der Transporteinheit (130) zwischen den Lagerebenen, kann eine weitere Funktion alternativ oder ergänzend vorgesehen sein, welche die Ausrichtung der relativen Positionen der Boxen (101) im Stapel zueinander und/oder gegenüber der MTU betreffen, auf welcher sich die Boxen befinden. Ziel kann es sein, alle Boxen des Stapels parallel zueinander auszurichten, um einen besonders sicheren Stand der Boxen in dem Stapel zu gewährleisten.

Durch das Stapeln von Boxen auf der MTU kann es zu relativen Verschiebungen der Boxen zueinander und/oder gegenüber der MTU kommen. Diese sind vorzugsweise auszugleichen, insbesondere bevor eine Umsortierung stattfindet. Dies kann einem Herunterfallen von Boxen aus dem Stapel vorbeugen.

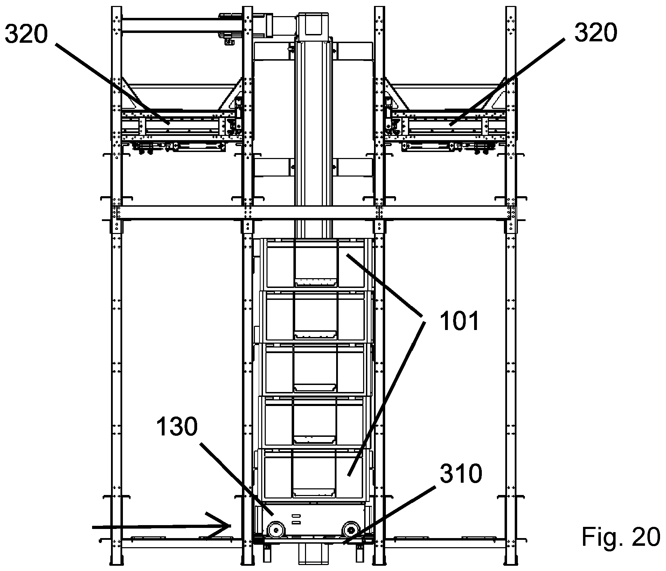

So zeigt Fig. 20 den Nullschrittbetrieb der Nachsortiereinrichtung (310, 320), bei dem die Transporteinrichtung (130) mit dem Stapel von Boxen (101) zur Hebebühne (310) der Einrichtung auf der unteren Lagerebene der Anlage fährt.

Die Fig. 21 - 23 zeigen den ersten Schritt der Nachsortiervorrichtung (310, 320), bei dem die Hebebühne (310) mit der Transportvorrichtung (130) mit dem darauf stehenden Stapel von Boxen (101) auf die Höhe einer Verschiebung des Stapels von Boxen bewegt wird, so dass sich die Ebene der Sensoren (340), welche die relative Verschiebung der Boxen zueinander oder der Boxen / des Stapels von Boxen zu der MTU (130) bzw. der Ablageeinrichtung des Ladebereichs (310) erfassen, vorzugsweise 10-30 mm unterhalb der Oberseite der obersten Box (101) des Stapels befindet. Abb. 21 zeigt in der Seitenansicht die Höhe der Ablageeinrichtung (310) und wo sich die Ebene der Sensoren (340) befinden kann.

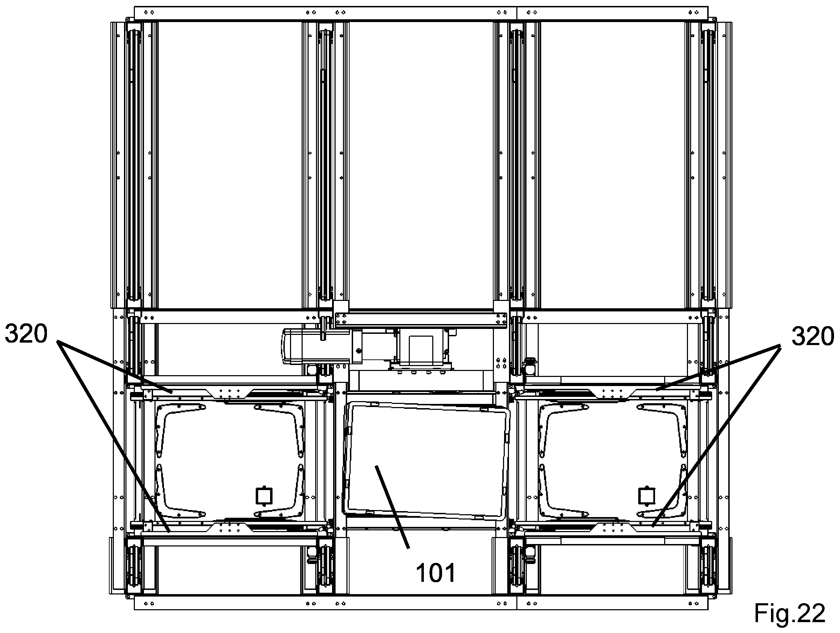

Abb. 22 zeigt in der Draufsicht den verrutschten Schalenstapel (101).

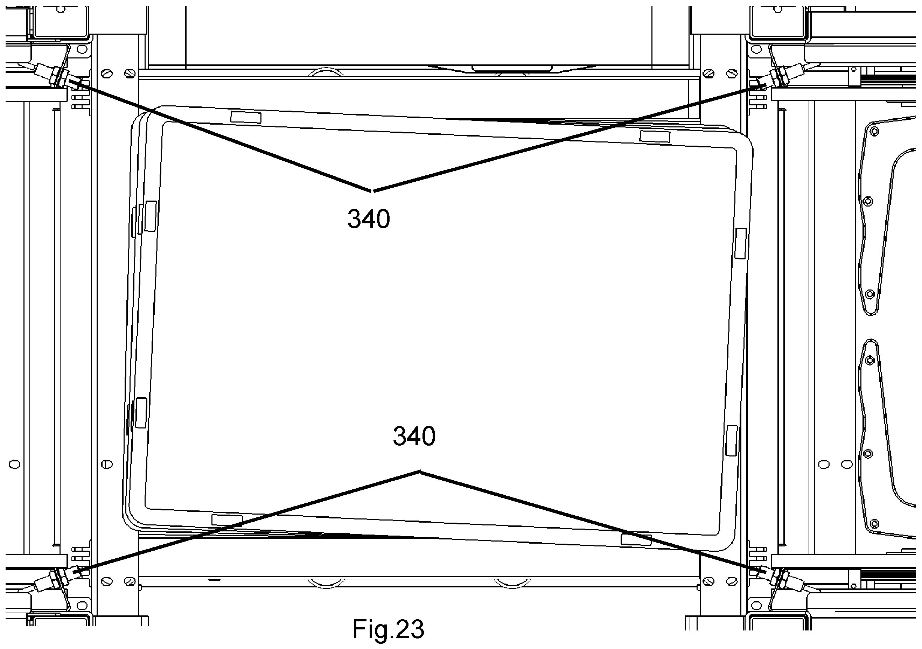

Abb. 23, eine ungefähre Draufsicht, zeigt einen verrutschten Stapel von Boxen (101), bzw. einzelne zueinander verrutschte Boxen und eine der Möglichkeiten zur Anordnung der Sensoren, die das Ausmaß des Verrutschens/Verdrehens der Boxen (101) im Stapel relativ zueinander oder zur MTU bestimmen. In der vorgeschlagenen Variante werden vorzugsweise 4 Sensoren verwendet, die beispielsweise den Abstand zu 4 Ecken der oberen Box (101) messen. Je nach der Differenz der gemessenen Abstände wird entschieden, ob der Stapel von Boxen bzw. eine einzelne Box gegenüber den übrigen Boxen ausgerichtet oder neu sortiert werden muss. Es sollte auch verstanden werden, dass die Anzahl der Sensoren, ihre Art und Anordnung von der in der Abbildung vorgeschlagenen abweichen kann, die in der Abbildung gezeigte Anordnung schränkt die Erfindung in keiner Weise ein. Vorzugsweise sind die Sensoren Angeordnet eine von einer gewünschten Ausrichtung abweichend Ausrichtung gegenüber weiteren Boxen des Stapels, der MTU und/oder dem Ablagebereich festzustellen.

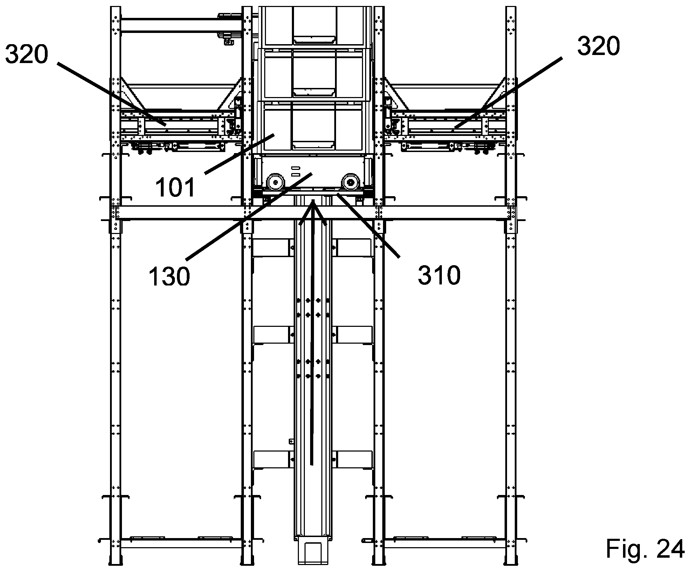

Abbildung 24 zeigt einen Arbeitsschritt der bei dem die Boxen (101) im Stapel ausgerichtet werden. Zu diesem Zweck kann die Hebebühne (310), wie in der Abbildung dargestellt, die Transportvorrichtung (130) mit dem darauf stehenden Stapel von Boxen (101) in eine Position bewegen, in der einer der Greifer (320) die unterste Box (101) des Stapels greifen kann.

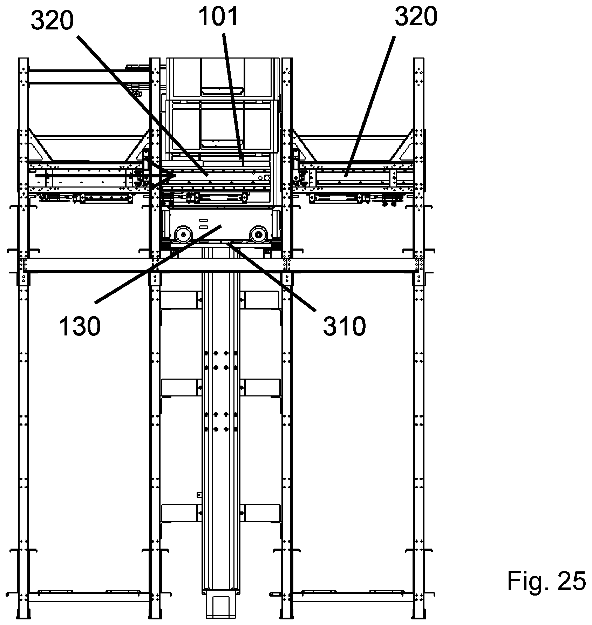

Abb. 25 zeigt in der Seitenansicht den nächsten Schritt des Ausrichtens des Stapels von Boxen (101), nämlich das Ausrichten der untersten Box (101) des Stapels, wobei ein Paar von Greifern (320) in den Arbeitsbereich der Ablagebereich des Ladebereichs (310) bewegt wird.

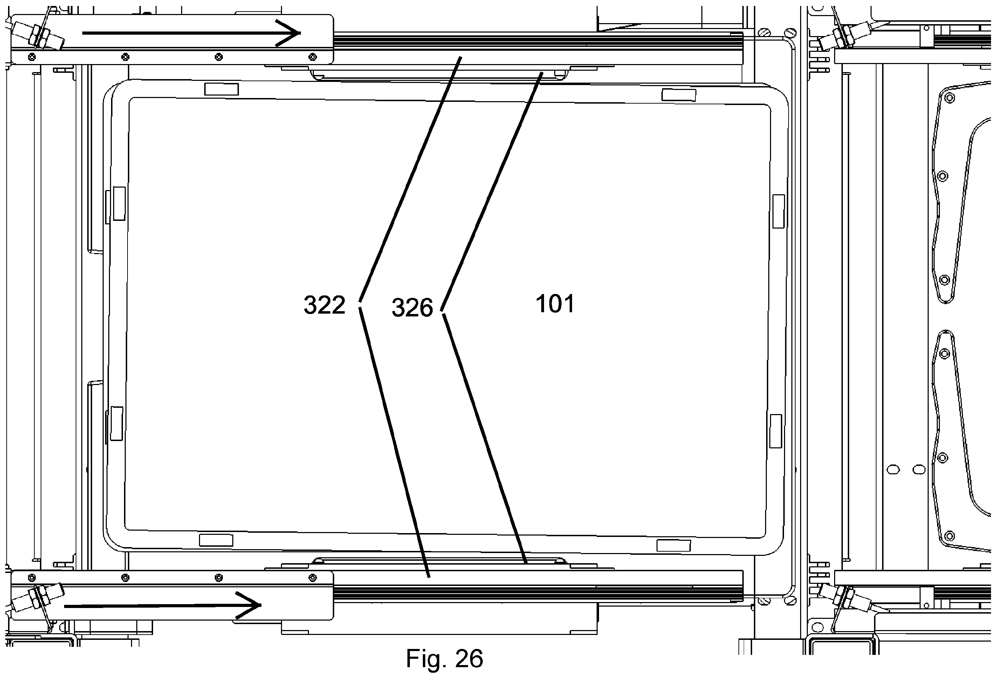

Die Abbildungen 26 bis 29 zeigen in der Draufsicht die Arbeitsschritte des Greiferpaars (320), dass die Ausrichtung der unteren Box (101) des Stapels vornimmt, vorzugsweise bevor die Boxen von den Greifern für eine Umsortierung Aufgenommen werden.

So zeigt Abb. 26 eine ähnliche Ausgangsposition wie die in Abb. 25 gezeigte Vorrichtung, nur in der Draufsicht, die zeigt, dass das Tablett (101) gegenüber den Grundflächen versetzt und schief ist.

In Abb. 25 sind die beweglichen Module (322) eines Greiferpaares (320) bevorzugt in den Arbeitsbereich der Hebebühne (310) ausgefahren, vorzugsweise während sich die Greiferklemmen (324) und/oder mit den Zentrierfingern (325) und/oder den Stützpolstern (326) in ihrem ursprünglichen Zustand (im Schatten der beweglichen Module) befinden können.

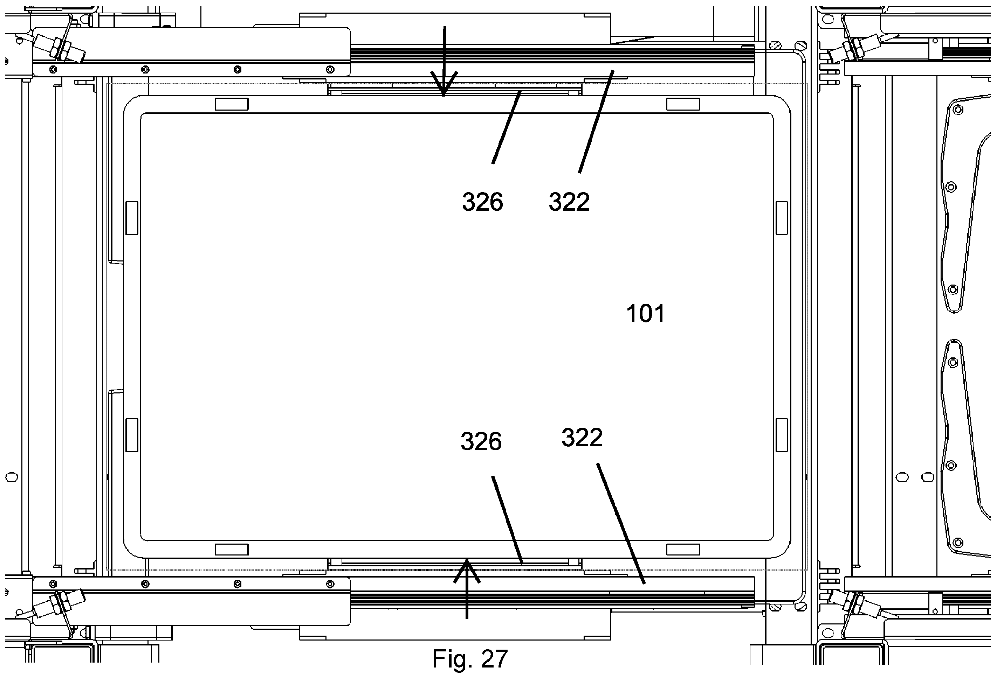

Abbildung 27 zeigt die Position, in der die Greifzangen (324) ihre Arbeitselemente Zentrierfinger (325) und Stützpolster (326) in die Greifposition der unteren Schale (101) des Stapels bewegen können und diesen dadurch ausrichten können.

Die Greifer können seitlich ausfahrbare Elemente aufweisen, welche, vorzugsweise seitlich, einer Box in dem Stapel zustellbar sind. Alternativ kann auch der Greifer selbst den Boxen seitlich zustellbar sein. Durch die kontaktierende Zustellung der Elemente/ der Greifer zu der Box, wird diese aus einer verrutschten/verdrehten Position heraus parallel zu den Greifern ausgerichtet. Die ausfahrbaren Elemente können dieselben Elemente sein, welche die Greifer zur Aufnahme bzw. zum Halten der Box oder der Boxen einsetzten. Eine wiederholte Anwendung/ Zustellung der Elemente/Greifer zu den einzelnen Boxen des Stapels richtet die Boxen zueinander parallel aus.

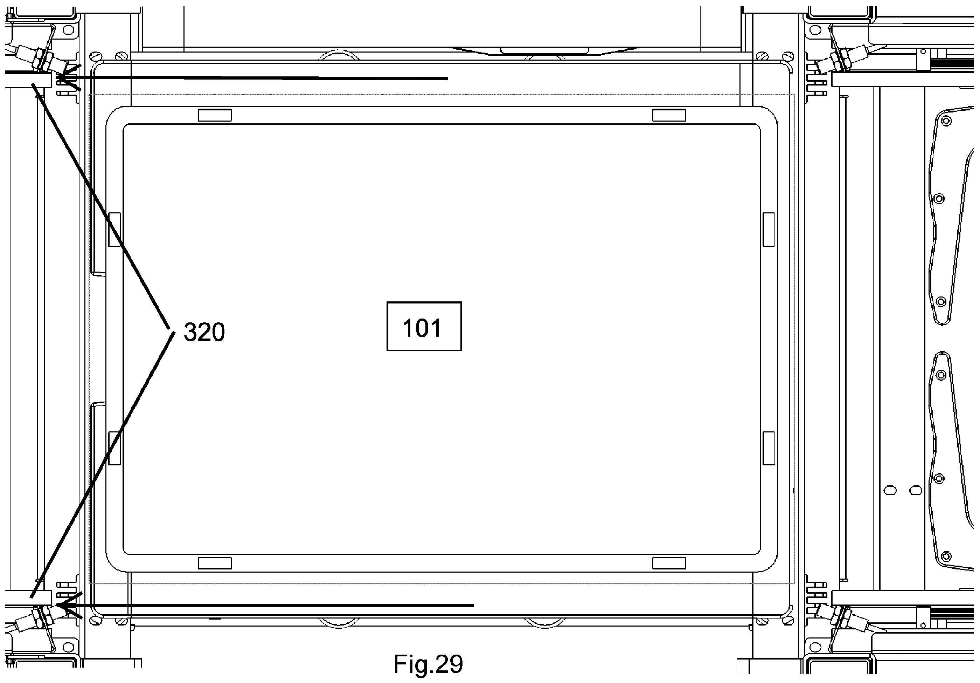

Die Position nach dem Ausrichten der unteren Schale (101) des Stapels ist in Abb. 29 dargestellt. Es ist zu erkennen, dass die Greifzangen (324) ihre Arbeitselemente Zentrierfinger (325) und Stützpolster (326) in ihre ursprüngliche Position im Schatten der beweglichen Module (322) gebracht haben und die untere Schale (101) des Stapels nach diesem Vorgang ausgerichtet ist.

Abb. 29 zeigt die endgültige Position der Greifer (320) nach dem Ausrichten der unteren Schale (101) des Stapels, wobei die Draufsicht zeigt, dass das Greiferpaar (320) seine beweglichen Module (322) aus dem Arbeitsbereich der Hebebühne (310) herausgezogen hat.

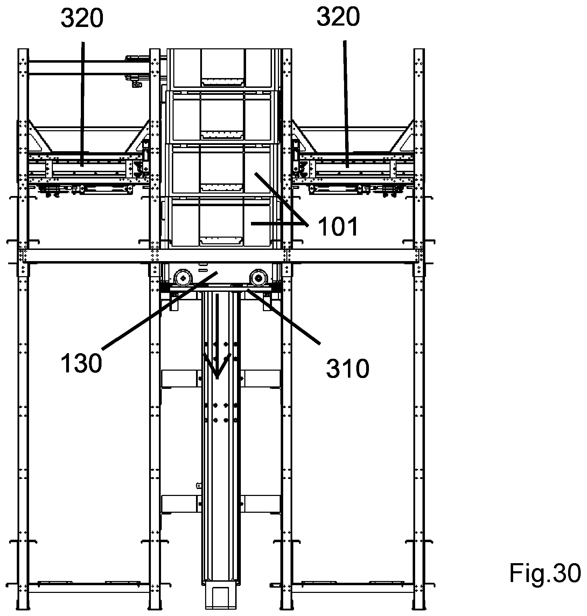

Abb. 30 zeigt den nächsten Arbeitsschritt der Nachsortiervorrichtung (310, 320). Die Seitenansicht zeigt, dass die Hebebühne (310) nach unten auf die Ausrichtungsebene des zweiten Fachs (101) des Stapels gefahren ist. Der Greifer ist also bereit die zweite Box von unten auszurichten.

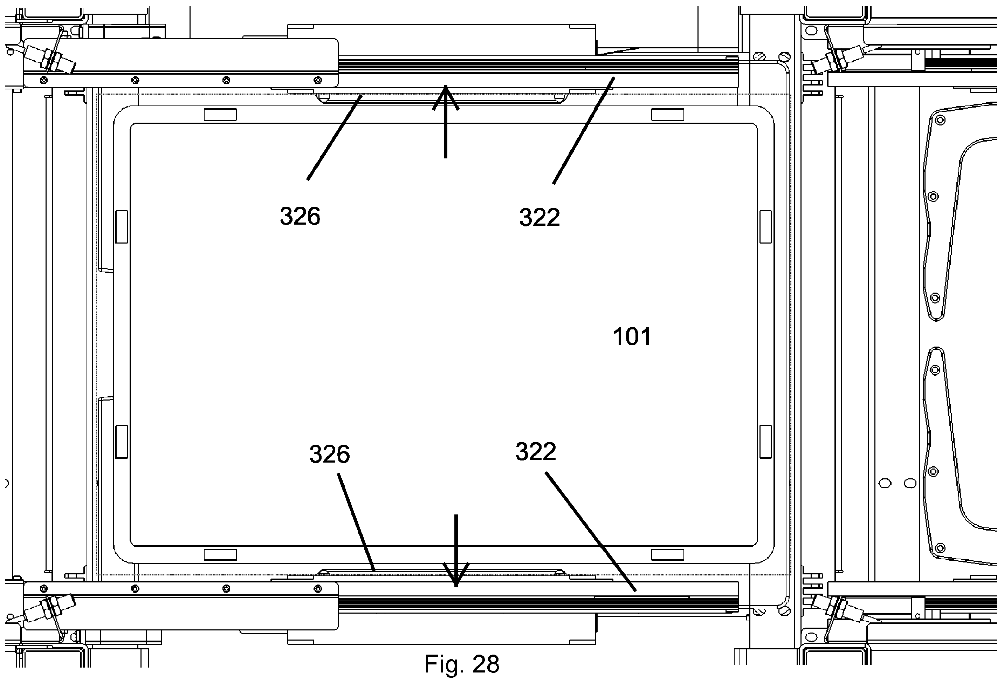

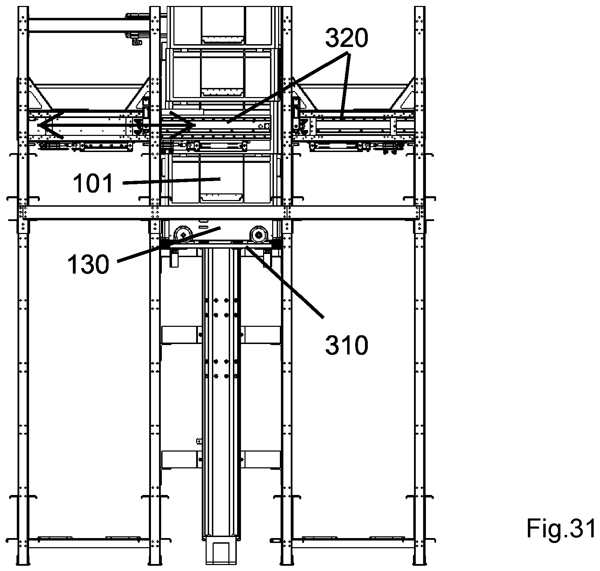

Abb. 31 zeigt einen Arbeitsschritt der Umsortiervorrichtung (310, 320), bei dem sie mit Hilfe eines Greiferpaares (320) ähnlich wie in den Figuren 28-31 eine Ausrichtung der zweiten Box (101) des Stapels vornimmt.

Die verbleibenden Boxen des Stapels werden nacheinander von unten nach oben ausgerichtet, so dass sie vorzugsweise wie in Fig. 5 dargestellt parallel zueinander und/oder parallel zur MTU und/ oder parallel zur Ablageeinrichtung ausgerichtet sind. Es kann eine Kontrollmessung der Position des oberen Tabletts des ausgerichteten Tablettsstapels (101) erfolgen und eine Entscheidung über die weiteren Aufgaben des Geräts (310, 320) getroffen werden.

Die Ausrichtung von unten nach oben ist in diesem Fall die einzig mögliche korrekte Lösung, da beim Ausrichten in einer anderen Reihenfolge (z. B. ein beliebiges mittleres Tray oder das oberste Tray des Stapels) der Boden des ausgerichteten Trays aus dem unteren Tray herausspringen und der gesamte Traystapel zerstört werden kann.

## Patentansprüche

1. Umsortiervorrichtung mit
- einem Ladebereich (310), welcher ausgebildet ist, eine Transportvorrichtung (130) mit oder ohne einer oder mehrerer Boxen (101) in Stapeln von einem Speichersystem (100), insbesondere über ein Transportsystem, oder von einem Transportsystem zu übernehmen **gekennzeichnet durch**
- mindestens einen ersten Greifer (320) und einen zweiten Greifer (320), welche ausgebildet sind, jeweils für sich genommen, mindestens eine, vorzugsweise mindestens zwei, besonders bevorzugt eine beliebige Zahl/Untermenge von Boxen von einem Stapel von Boxen von einer Transportvorrichtung (130) in dem Ladebereich (310), also unabhängig voneinander aufzunehmen und zu halten und weiter ausgebildet sind, die jeweils aufgenommene eine Box oder aufgenommenen mehreren Boxen (101) an die in dem Ladebereich (310) befindliche Transportvorrichtung (130) oder eine andere Transportvorrichtung (130) in dem Ladebereich wieder abzugeben,
- eine bewegliche Ablageeinrichtung, welche in dem Ladebereich (310) oder als Teil davon bereitgestellt ist und vertikal verfahrbar einem Zugriff des ersten und des zweiten Greifers (320) zustellbar ist, und
- dass der erste und der zweite Greifer (320) zwischen einer zurückgezogenen Halteposition, in welcher die mindestens eine Box an einem der Greifer (320) zwischenlagerbar ist, und einer der Ablageeinrichtung zugestellten Aufnahmeposition, zur Aufnahme und Abgabe von der mindestens einen Box (101) von/an die Ablageeinrichtung, vorzugsweise horizontal verschieblich gelagert sind.

2. Umsortiervorrichtung nach Anspruch 1
**dadurch gekennzeichnet,**
**dass** die Greifer (320) ausgebildet sind, einer Box im Ladebereich seitlich zugestellt zu werden oder Elemente aufweisen, welche einer Box im Ladebereich seitlich zustellbar sind, wodurch diese vom Greifer (320) aufnehmbar oder gegenüber einer darunterliegenden Box ausrichtbar ist.

3. System (100) zum Speichern und Organisieren von Materialien mit einer Umsortiervorrichtung nach einem der Ansprüche 1 oder 2 umfassend:
ein Speicherbereich,
mit einer Mehrzahl von Ebenen, die jeweils mehrere Lagerplätze (110) umfassen, die bevorzugt in Reihen in mindesten einer horizontalen Richtung, vorzugsweise zwei horizontalen Richtungen senkrecht zueinander, angeordnet sind und dazu dienen, Boxen (101) in Stapeln als Lagerplatz für die Materialien, aufzunehmen,
mindestens eine Transportvorrichtung (130), welche einen Aufnahmebereich (131) für einzelne Boxen (101) oder einen Stapel von Boxen (101) aufweist,
ein Transportsystem, insbesondere eine Schienenanordnung, entlang welcher die mindestens eine Transportvorrichtung (130) vom und/oder zum und/oder innerhalb des Speichersystem/s (100) verfahrbar und individuellen Boxen oder Stapeln von Boxen in dem Speichersystem (100) zu deren Aufnahme zustellbar bereitgestellt ist .

4. System zum Speichern und Organisieren von Materialien nach Anspruch 3,
**dadurch gekennzeichnet,**
**dass** der erste und der zweite Greifer (320) in einem 90 ° oder 180° Winkel zueinander gegenüber dem Ladebereich angeordnet sind.

5. System zum Speichern und Organisieren von Materialien nach Anspruch 3 oder 4,
**dadurch gekennzeichnet,**
**dass** der erste und der zweite Greifer (320) in einer gemeinsamen horizontalen Ebene angeordnet sind.

6. System zum Speichern und Organisieren von Materialien nach einem der Ansprüche 3 bis 5,
**dadurch gekennzeichnet,**
**dass** der Ladebereich (310) in einer Ausgangsposition mit dem Transportsystem horizontal ausgerichtet ist, wodurch ein Übergang einer Transportvorrichtung (130) von dem Transportsystem (420) zu dem Ladebereich bereitgestellt ist.

7. System zum Speichern und Organisieren von Materialien nach Anspruch 6,
**dadurch gekennzeichnet,**
**dass** die Ausgangsposition oberhalb oder unterhalb der Aufnahmeposition für die Greifer (320) angeordnet ist

8. System zum Speichern und Organisieren von Materialien nach einem der Ansprüche 3 bis 7
**dadurch gekennzeichnet,**
**dass** die Greifer (320) ausgebildet sind, einer Box im Ladebereich seitlich zugestellt zu werden oder Elemente aufweisen, welche einer Box im Ladebereich seitlich zustellbar sind, wodurch diese vom Greifer (320) aufnehmbar oder gegenüber einer darunterliegenden Box ausrichtbar ist.

## Claims

1. Resorting device with
a loading area (310), which is designed to receive a transport device (130) with or without one or more boxes (101) in stacks from a storage system (100), in particular via a transport system, or from a transport system
**characterized by**
at least a first gripper (320) and a second gripper (320), which are designed to independently pick up and hold at least one, preferably at least two, particularly preferably any number/subset of boxes from a stack of boxes from a transport device (130) in the loading area (310), and are further designed to return the picked up single box or multiple boxes (101) to the transport device (130) in the loading area (310) or another transport device (130) in the loading area,
a movable storage device, which is provided in the loading area (310) or as part of it and is vertically movable to be accessible to the first and second grippers (320), and that the first and second grippers (320) are preferably horizontally movably mounted between a retracted holding position, in which the at least one box can be temporarily stored on one of the grippers (320), and a pick-up position aligned with the storage device, for picking up and depositing the at least one box (101) from/to the storage device.

2. Resorting device according to claim 1
**characterized in that**
the grippers (320) are designed to be laterally aligned with a box in the loading area or have elements which can be laterally aligned with a box in the loading area, whereby it can be picked up by the gripper (320) or aligned with a box underneath it.

3. System (100) for storing and organizing materials with a resorting device according to one of claims 1 or 2 comprising:
a storage area,
with a plurality of levels, each comprising multiple storage locations (110), which are preferably arranged in rows in at least one horizontal direction, preferably two horizontal directions perpendicular to each other, and serve to accommodate boxes (101) in stacks as storage locations for the materials,
at least one transport device (130), which has a receiving area (131) for individual boxes (101) or a stack of boxes (101),
a transport system, in particular a rail arrangement, along which the at least one transport device (130) can be moved from and/or to and/or within the storage system(s) (100) and is provided to be aligned with individual boxes or stacks of boxes in the storage system (100) for their retrieval.

4. System for storing and organizing materials according to claim 3,
**characterized in that**
the first and second grippers (320) are arranged at a 90° or 180° angle to each other opposite the loading area.

5. System for storing and organizing materials according to claim 3 or 4,
**characterized in that**
the first and second grippers (320) are arranged in a common horizontal plane.

6. System for storing and organizing materials according to one of claims 3 to 5,
**characterized in that**
that the loading area (310) is horizontally aligned with the transport system in a starting position, thereby providing a transition of a transport device (130) from the transport system (420) to the loading area.

7. System for storing and organizing materials according to claim 6,
**characterized in that**
the starting position is arranged above or below the pick-up position for the grippers (320)

8. System for storing and organizing materials according to one of claims 3 to 7
**characterized in that**
the grippers (320) are designed to be laterally aligned with a box in the loading area or have elements which can be laterally aligned with a box in the loading area, whereby it can be picked up by the gripper (320) or aligned with a box underneath it.

## Revendications

1. Dispositif de réorganisation avec
une zone de chargement (310) conçue pour recevoir un dispositif de transport (130) avec ou sans une ou plusieurs boîtes (101) empilées d'un système de stockage (100), en particulier via un système de transport, ou d'un système de transport
**caractérisé par**
au moins une première pince (320) et une deuxième pince (320), chacune étant conçue pour saisir et maintenir indépendamment au moins une, de préférence au moins deux, et plus particulièrement un nombre/sous-ensemble quelconque de boîtes d'une pile de boîtes d'un dispositif de transport (130) dans la zone de chargement (310), et étant en outre conçues pour restituer la ou les boîtes (101) saisies au dispositif de transport (130) présent dans la zone de chargement (310) ou à un autre dispositif de transport (130) dans la zone de chargement,
un dispositif de dépôt mobile, qui est fourni dans la zone de chargement (310) ou en fait partie et qui peut être déplacé verticalement pour être accessible à la première et à la deuxième pince (320), et
que la première et la deuxième pince (320) sont montées de manière coulissante, de préférence horizontalement, entre une position de maintien rétractée, dans laquelle au moins une boîte peut être stockée temporairement sur l'une des pinces (320), et une position de prise avancée vers le dispositif de dépôt, pour la prise et la restitution d'au moins une boîte (101) du/au dispositif de dépôt.

2. Dispositif de réorganisation selon la revendication 1
**caractérisé en ce que**
les pinces (320) sont conçues pour être avancées latéralement vers une boîte dans la zone de chargement ou comportent des éléments qui peuvent être avancés latéralement vers une boîte dans la zone de chargement, permettant ainsi à la pince (320) de saisir la boîte ou de l'aligner par rapport à une boîte située en dessous.

3. Système (100) pour le stockage et l'organisation de matériaux avec un dispositif de réorganisation selon l'une des revendications 1 ou 2 comprenant :
une zone de stockage,
avec une pluralité de niveaux, comprenant chacun plusieurs emplacements de stockage (110), qui sont de préférence disposés en rangées dans au moins une direction horizontale, de préférence deux directions horizontales perpendiculaires l'une à l'autre, et servent à recevoir des boîtes (101) en piles comme emplacement de stockage pour les matériaux,
au moins un dispositif de transport (130), qui comporte une zone de réception (131) pour des boîtes individuelles (101) ou une pile de boîtes (101),
un système de transport, en particulier un arrangement de rails, le long duquel le au moins un dispositif de transport (130) peut être déplacé depuis et/ou vers et/ou à l'intérieur du système de stockage (100) et est fourni de manière à pouvoir être avancé vers des boîtes individuelles ou des piles de boîtes dans le système de stockage (100) pour les saisir.

4. Système pour le stockage et l'organisation de matériaux selon la revendication 3,
**caractérisé en ce que**
la première et la deuxième pince (320) sont disposées à un angle de 90° ou 180° l'une par rapport à l'autre face à la zone de chargement.

5. Système pour le stockage et l'organisation de matériaux selon la revendication 3 ou 4,
**caractérisé en ce que**
la première et la deuxième pince (320) sont disposées dans un même plan horizontal.

6. Système pour le stockage et l'organisation de matériaux selon l'une des revendications 3 à 5,
**caractérisé en ce que**
**que** la zone de chargement (310) est alignée horizontalement avec le système de transport dans une position initiale, fournissant ainsi une transition d'un dispositif de transport (130) du système de transport (420) vers la zone de chargement.

7. Système pour le stockage et l'organisation de matériaux selon la revendication 6,
**caractérisé en ce que**
la position initiale est située au-dessus ou en dessous de la position de réception pour les pinces (320)

8. Système pour le stockage et l'organisation de matériaux selon l'une des revendications 3 à 7
**caractérisé en ce que**
les pinces (320) sont conçues pour être avancées latéralement vers une boîte dans la zone de chargement ou comportent des éléments qui peuvent être avancés latéralement vers une boîte dans la zone de chargement, permettant ainsi à la pince (320) de saisir la boîte ou de l'aligner par rapport à une boîte située en dessous.
